(19) Europäisches Patentamt
European Patent Office
Office européen des brevets

(11) EP 1 902 592 B1

(12) EUROPEAN PATENT SPECIFICATION

(45) Date of publication and mention of the grant of the patent:
**31.08.2016 Bulletin 2016/35**

(21) Application number: **06758017.5**

(22) Date of filing: **03.07.2006**

(51) Int Cl.:
***H04W 16/32*** $^{(2009.01)}$

(86) International application number:
**PCT/SE2006/000824**

(87) International publication number:
**WO 2007/004956 (11.01.2007 Gazette 2007/02)**

(54) **CELL WEIGHT BASED MOBILITY MEASURE**

MOBILITÄTSMASS AUF ZELLENGEWICHTSBASIS

MESURE DE MOBILITE BASEE SUR UN POIDS DE CELLULE

(84) Designated Contracting States:
**AT BE BG CH CY CZ DE DK EE ES FI FR GB GR HU IE IS IT LI LT LU LV MC NL PL PT RO SE SI SK TR**

(30) Priority: **06.07.2005 SE 0501587**

(43) Date of publication of application:
**26.03.2008 Bulletin 2008/13**

(73) Proprietor: **Telia Company AB**
**16994 Solna (SE)**

(72) Inventor: **ERNSTRÖM, Per**
**S-117 50 Stockholm (SE)**

(74) Representative: **Zacco Sweden AB**
**P.O. Box 5581**
**114 85 Stockholm (SE)**

(56) References cited:
**EP-A1- 0 701 382**
**EP-A2- 0 785 696**
**US-A- 5 548 806**
**US-A1- 2002 102 976**
**US-A1- 2003 050 754**
**US-B1- 6 192 245**

- **CHI WAN SUNG ET AL: "User speed estimation and dynamic channel allocation in hierarchical cellular system", VEHICULAR TECHNOLOGY CONFERENCE, 1994 IEEE 44TH STOCKHOLM, SWEDEN 8-10 JUNE 1994, NEW YORK, NY, USA,IEEE, 8 June 1994 (1994-06-08), pages 91-95, XP010123149, ISBN: 978-0-7803-1927-1**
- **LAGRANGE X ET AL: "Performance of a hierarchical cellular network with mobility-dependent hand-over strategies", VEHICULAR TECHNOLOGY CONFERENCE, 1996. MOBILE TECHNOLOGY FOR THE HUMAN RACE., IEEE 46TH ATLANTA, GA, USA 28 APRIL-1 MAY 1996, NEW YORK, NY, USA,IEEE, US, vol. 3, 28 April 1996 (1996-04-28), pages 1868-1872, XP010162717, DOI: 10.1109/VETEC.1996.504082 ISBN: 978-0-7803-3157-0**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 902 592 B1

## Description

FIELD OF THE INVENTION

The present invention relates to cell weight based mobility measure, and especially to a method for a mobile user equipment to estimate its mobility.

BACKGROUND

The geographical area covered by cellular mobile systems is divided in to smaller radio coverage areas, cells, to achieve a more efficient utilization of the frequency band. In a hierarchical cellular system, a layer of smaller-sized cells, e.g. a layer of micro or pico cells, are installed over a layer of larger-sized cells, e.g. a layer of macro cells. Use of the smaller-sized cells increases the capacity of the mobile system by increasing the number of radio channels servicing the geographic area. In a hierarchical system, the majority of traffic is serviced on the layers of smaller-sized cells. However, if a wireless user equipment is moving rapidly, the system handovers the wireless user equipment to the layer of larger-sized cells.

The Japanese patent document JP 2000-092540 discloses a mobile radio communication system, mobile radio terminal equipment and a method for detecting the moving speed of the mobile radio terminal in the mobile radio communication system. JP 2000-092540 describes supply of a velocity estimate to the network side in response to a request from the network. The velocity estimate is only used in the network for handover. JP 2000-092540 further requires that the user equipment has an ongoing call.

A drawback with the prior art system and method of JP 2000-092540 is that the user equipment has to have an ongoing call. Further, the system and method perform handovers.

The patent document US 2002/0102976 A1 describes a system and method for performing inter-layer handoff in a hierarchical cellular layer. The system and method described are used during an ongoing call and are based on handovers. US 2002/0102976 A1 is based on the time spent in a cell, generalized to a weighted sum of times spent between intra-layer handoffs. Further, a timer, or weighted sum of times, is restarted at cell layer change. US 2002/0102976 A1 also describes a mainly network based functionality and does not mention broadcast of cell weights.

Drawbacks with the system of US 2002/0102976 A1 are that it is only used during ongoing calls and that it is based on handover. Another disadvantage is that it is based on the time spent in a cell, which is generalised to a weighted sum of times spent between intra-layer handoffs. Yet another disadvantage is that a timer, or weighed sum of times, is restarted at cell layer change.

The US patent 5,907,808 relates to a system and a method for performing inter-layer handoff in a hierarchical cellular layer. US 5,907,808 is used during an ongoing call and is based on handovers. Further, US 5,907,808 describes a mainly network based functionality. A Base Station Controller BSC maintains the handover history of the user equipment, and the micro cells recognize the mobile station as fast. There is no mentioning of broadcast of parameters that would be necessary, if the functionality would be located in the user equipment. The patent document US 5,907,808 is focused on the network functionality and does not at all mention broadcast of cell weights.

Drawbacks with the system and method of US 5,907,808 are that they are only used during ongoing calls and are based on handovers. Another drawback is that the system and method relate to a mainly network based functionality.

OBJECT OF THE INVENTION

The optimal behaviour for a mobile user equipment depends on just how mobile it is at a certain instance in time, i.e. the optimal behaviour for the mobile user equipment depends on its mobility. An object of the present invention is therefore to provide a method for a mobile user equipment to estimate its mobility, whereby the user equipment may improve its performance. By means of the present invention the user equipment can be in the best hierarchical cell layer depending on its mobility.

An aspect of the object is to estimate the mobility based on broadcasted cell size information.

Another aspect of the object is to estimate the mobility when the user equipment is in idle mode and performs cell reselection.

Yet another aspect of the object is to determine how often the user equipment performs cell reselection, whereby the user equipment can determine if it is moving fast or not.

Another aspect of the object is to base the mobility estimation on a weighed sum of cell reselections during a certain time period.

Yet another aspect of the object is to provide a mainly terminal based functionality, i.e. a user equipment functionality.

## SUMMARY OF THE INVENTION

The present invention overcomes the above-mentioned drawbacks by providing a new more accurate measure of mobility taking into account differences in cell size, and the time spent in the different cells.

The invention is defined in the independent claims. Preferred embodiments of the invention are defined in the dependent claims.

The inventive mobility measure can be used to trigger high mobility state or states in the user equipment UE. In the high mobility state, the UE behaviour is modified to behave in a way optimized specifically for high mobility. The behaviour for high mobility can be modified and optimized in different ways.

## BRIEF DESCRIPTION OF THE DRAWINGS

The present invention will be described in more detail with reference to the accompanying drawing, in which Figure 1 schematically shows a hierarchical cellular system.

## DETAILED DESCRIPTION

The present invention will now be described in more detail with reference to the only drawing. In the description, the following abbreviations and acronyms will be used.

| | |
|---|---|
| CDMA | Code Division Multiple Access |
| CR | Cell Reselection |
| GSM | Global System for Mobile Communications |
| HCS | Hierarchical Cell Structure |
| LAN | Local Area Network |
| RAT | Radio Access Technology |
| RRC | Radio Resource Control |
| UE | User Equipment |
| UMTS | Universal Mobile Telecommunications System |
| WLAN | Wireless LAN |

In this description text, reference is also made to 3GPP TS 25.331 Radio Resource Control (RRC), 3GPP TS 25.304 User Equipment (UE) procedures in idle mode and procedures for cell reselection in connected mode, and Requirements for support of radio resource management (FDD).

It should be emphasised that the term comprising or comprises, when used in this description and in the appended claims is taken to specify the presence of stated features, integers, steps or components but does not preclude the presence or addition of one or more other features, integers, steps, components or groups thereof.

A cellular network 10 based on a hierarchical cell structure HCS is built of two or more cell layers, as schematically illustrated in Figure 1. The lowest layer 12, called the macro-cell layer, comprises larger-sized cells 12a, i.e. macro cells, and is used to build coverage and good mobility. The higher layers 14, 16 are called the micro cell layer 14 and the pico cell layer 16. The micro cell layer 14 comprised smaller-sized cells, the so called micro cells 14a, and the pico cell layer 16 comprises even smaller sized cells, the so called pico cells 16a. The micro and pico cell layers are built for capacity where there is a high demand.

The different cell layers provide services to a mobile user equipment 20 through cell sites or base stations 12b, 14b, 16b.

The mobile user equipment can be any kind of wireless radio terminal or communication terminal, and includes all mobile equipment devised for radio communication with a radio station, which radio station also may be mobile terminal or e.g. a stationary base station. Consequently, the term radio terminal includes mobile telephones, pagers, communicators, electronic organisers, smart phones, PDA:s (Personal Digital Assistants), laptop computers, and DECT terminals (Digital Enhanced Cordless Telephony). Hence, although the structure and characteristics of the invention are mainly described herein, by way of example, in the implementation in a mobile user equipment, this is not to be interpreted as excluding the embodiment and implementtation of the invention in other types of electronic devices.

The different cell layers 12, 14, 16 need not necessarily be built based on the same radio technology. As an example the macro layer could be built based on GSM, the micro layer could be based on UMTS and the pico layer could consist of WLAN hotspots. If it’s based on different radio access technologies RAT’s, inter RAT mobility, i.e. handover and cell reselection, is needed.

In UMTS, the user equipment is considered as fast moving or in a high mobility state when it performs more than $N_{CR}$ cell reselections during a time period of length $T_{CRmax}$. The number of cell reselections $N_{CR}$ and the time

period $T_{CRmax}$ are both system information broadcast parameters. A drawback with this measure of mobility is that it does not take into account that the size of cells can be very different. If a user equipment is moving through small cells, it will make many cell reselections in a short time, even though it is not moving very fast.

In a hierarchical cell structure, cell sizes typically vary very much between different layers. As an example a WLAN pico cell layer typically has very much smaller cell size than a GSM macro cell layer.

When a user equipment moves from one hierarchical cell structure layer to another it will therefore take time before the measure becomes a good measure of mobility in the new cell layer. In UMTS this time period is of the order of $T_{CRmax}$.

A user equipment, which is moving fast, should preferably camp on the macro layer, to give it enough time to perform cell reselection. The time needed to traverse a cell is on the average proportional to the size of the cell and inversely proportional to the velocity of the user equipment. If a fast moving user equipment is camping on the micro or pico layer, it may not have time to identify, to measure and to evaluate neighbour cell signals in time to perform a cell reselection before it gets out of coverage of the current cell. As a consequence it may end up being out of service a large part of the time. Thus it may miss a paging, a call-attempt may fail, or packet data transmission may perform very badly.

A user equipment, which is not moving or is moving slowly, should preferably camp on a micro or pico layer, where there is a lot of capacity available.

A user equipment, which is moving fast, need to perform neighbour cell measurements very frequently in order to be able to perform cell reselection in time, i.e. before it moves out of coverage of the current cell.

A user equipment, which is not moving, or is moving slowly, need not make neighbour cell measurements very frequently, and can thus save battery power, by reducing the measurement activities.

In general, the inventive method can be described as comprising the steps of:

- letting all cells of the cellular system broadcast a cell weight parameter, reflecting the effective size of the cell, and
- letting the user equipment calculate a mobility measure based on this cell weight parameter and the time it spent camping in the cell.

The exact way to create the measure can be varied in many different ways.

Assume that a user equipment has made N cell re-selections during a time period of length $T_{CRmax}$. The same notation as the one used in the UMTS standard is used, but it should be understood that despite this the two terms need not necessarily be identified, not even for use in UMTS. Number the cell reselection from one to N, starting from the last cell reselection that was made into the current serving cell. Let $w_i$ be the cell weight parameter, and $t_i$ be the time the user equipment spent in the cell, for the cell the user equipment left when making cell re-selection *i*. Let $w_0$ be the cell weight parameter, and $t_0$ be the time the user equipment spent so far in the current serving cell.

According to a first embodiment of the invention, define the mobility measure as the effective velocity measure *v*:

$$v = \frac{\sum_{i=1}^{N} w_i}{\sum_{i=1}^{N} t_i}$$

Note that if $w_i$ is the average length of a user equipment trajectory in cell *i*, then the expectation value of the stochastic variable *v* is the average velocity of the user equipment during the time spent in the N cells. Note, however, that the weights $w_i$, are in no way restricted to be the average length of a user equipment trajectory in cell *i*, but may be tuned to achieve optimal behaviour, taking also other aspects than cell-size into account.

In a second embodiment of the invention, the effective velocity is restricted in time and denoted $v_R$. The effective velocity measure *v* defined above, takes into account the whole period the user equipment spent in cell N, even though this time extends into the time period before the time period of length $T_{CRmax}$. If a user equipment is moving slowly or not at all and stays in a cell A for a very long time period, and then starts to move fast, then the slow moving phase will typically dominate the measure until the cell reselection out of cell A is older than $T_{CRmax}$.

To make the measure reflect the increased mobility more quickly, the effective velocity averaging period can be strictly limited not to extend before the time period of length $T_{CRmax}$.

Thus the measure will be $v_R$:

$$v_R = \frac{\dfrac{\left(T_{CR\max} - \sum_{i=0}^{N-1} t_i\right)}{t_N} w_N + \sum_{i=1}^{N-1} w_i}{T_{CR\max} - t_0}$$

In a third embodiment of the invention, a modified effective velocity $v_0$ is defined. The effective velocity measure *v* defined above, does not take into account the information that the user equipment has stayed in the current cell, with weight $w_0$, for a time period $t_0$ without making a cell re-selection. The problem here is that the user equipment does not know for how long time, $t_{current}$, it will stay in the current cell before it makes a cell re-selection, and thus the effective velocity estimate $w_0/t_{current}$ for the current cell can not be calculated. Since $W_0/t_{current} < W_0/t_0$ one can use $w_0/t_0$ instead of $w_0/t_{current}$, when it decreases the total effective velocity estimate, since using $w_0/t_{current}$ would then decrease the total effective velocity estimate even more, and thus the change is in the correct direction.

This can be formalized as a modified effective velocity measure $v_0$ :

$$\text{IF} \quad \frac{w_0}{t_0} < \frac{\sum_{i=1}^{N} w_i}{\sum_{i=1}^{N} t_i} \quad \text{THEN} \quad v_0 = \frac{\sum_{i=0}^{N} w_i}{\sum_{i=0}^{N} t_i} \quad \text{ELSE} \quad v_0 = \frac{\sum_{i=1}^{N} w_i}{\sum_{i=1}^{N} t_i}$$

This way the fact that a user equipment has slowed down or even stopped in a cell, is reflected more quickly in the mobility measure.

The effective velocity restricted in time $v_R$, can be modified in the same way.

In a fourth embodiment of the invention, a mobility measure is defined as a weighted number of cell reselection $N_w$. A slightly simpler mobility measure than the two defined above can be constructed as the weighted number of cell reselection $N_w$ during a time period of length $T_{CRmax}$:

$$N_w = \sum_{i=1}^{N} w_i$$

According to this embodiment, the information of the time spent in the different cells is not used.

As an aside, one may note that this measure is not as different from the first measure *v* defined above, as one might first believe. Often, but not always, and depending N on the circumstances, $\sum_{i=1}^{N} t_i \approx T_{CR\max}$ , and thus, if the same weights $w_i$ are used for the two measures, $N_w \approx T_{CRmax} \cdot v$, i.e. $N_w$ is approximately proportional to *v*.

If all weights are set to 1, then the mobility measure coincides with the measure used in UMTS. If introduced in a future release of the UMTS standard, the old broadcast parameters used to define the high mobility functionality could therefore be re-used in a straightforward way. The weights $w_i$ would still need to be added to the system information broadcast, of course.

This measure may also be considered slightly less complex for the user equipment to handle. However, since the user equipment must anyway store the time for recent cell re-selections to be able to decide if they should be included in the calculation of the mobility measure, i.e. if they were performed within a time period of length $T_{CRmax}$, the complexity difference is very small.

The invention has been described with reference to exemplifying embodiments. However, it should be understood that the invention can be used for any radio technology or combination of radio technologies for mobile communication, e.g. UMTS, GSM, WLAN, CDMA2000.

The invention can be used to get a more accurate measure of the mobility of a user equipment, which can then be used as a more accurate trigger of a high mobility state, in which the user equipment behaviour can be modified, e.g. to prioritize cell reselection to a macro-cell layer, or to increase the neighbour cell measurement activity in order to improve cell reselection performance at the cost of increased battery consumption.

The invention is particularly useful to control mobility when the cell sizes differ very much. This is often the case when different technologies are combined; cf. for example the mobility between a small WLAN hotspot cell and a GSM macro cell. The mechanism requires a new broadcast parameter to be sent out in all cells.

## Claims

1. A method for a mobile user equipment (20) to estimate its mobility in a hierarchical cellular mobile system (10), the system comprising a smaller-sized cell layer (14, 16) and a larger-sized cell layer (12), the method comprising the steps of:

   - receiving a cell weight parameter broadcasted from a cell in the hierarchical cellular mobile system (10), the cell weight parameter reflecting the effective size of the cell (12a, 14a, 16a), and
   - letting the user equipment (20) calculate a mobility measure based on the cell weight parameter and the time it spent camping in the cell (12a, 14a, 16a).

2. A method of claim 1, further comprising the step of defining the mobility measure as the effective velocity measure

   $$v: \quad v = \frac{\sum_{i=1}^{N} w_i}{\sum_{i=1}^{N} t_i},$$ wherein:

   - N is the number of cell re-selections a user equipment has made during a time period of length $T_{CRmax}$;
   - $w_i$ is the cell weight parameter; and
   - $t_i$ is the time the user equipment (20) spent in the cell (12a, 14a, 16a), for the cell the user equipment left when making cell re-selection *i*.

3. A method of claim 1 or 2, further comprising the step of defining the mobility measure as the effective velocity restricted in time $v_R$:

   $$v_R = \frac{\dfrac{\left(T_{CR\max} - \sum_{i=0}^{N-1} t_i\right)}{t_N} w_N + \sum_{i=1}^{N-1} w_i}{T_{CR\max} - t_0},$$ wherein:

   - N is the number of cell re-selections the user equipment has made during a time period of length $T_{CRmax}$;
   - $w_i$ is the cell weight parameter;
   - $t_i$ is the time the user equipment spent in the cell, for the cell the user equipment left when making cell re-selection *I*; and
   - $t_0$ is the time the user equipment has spent so far in the current serving cell.

4. A method of any preceding claim, further comprising the step of defining the mobility measure as a modified effective velocity $v_0$:

   $$v_0 = \frac{\sum_{i=0}^{N} w_i}{\sum_{i=0}^{N} t_i} \quad \text{IF} \quad \frac{w_0}{t_0} < \frac{\sum_{i=1}^{N} w_i}{\sum_{i=1}^{N} t_i} \quad \text{ELSE} \quad v_0 = \frac{\sum_{i=1}^{N} w_i}{\sum_{i=1}^{N} t_i};$$

   wherein:

   - N is the number of cell re-selections the user equipment has made during a time period of length $T_{CRmax;}$
   - $w_i$ is the cell weight parameter;

- $t_i$ is the time the user equipment spent in the cell, for the cell the user equipment left when making cell re-selection *I*;
- $w_0$ is the cell weight parameter; and
- $t_0$ is the time the user equipment has spent so far in the current serving cell.

**5.** A method of any preceding claim, further comprising the step of defining a mobility measure as a weighted number of cell reselection $N_w$: $N_w = \sum_{i=1}^{N} w_i$ , wherein

- N is the number of cell re-selections the user equipment has made during a time period of length $T_{CRmax}$; and
- $w_i$ is the cell weight parameter.

**6.** A mobile user equipment (20) comprising means for performing the method steps of any of the proceeding claims.

## Patentansprüche

**1.** Verfahren für eine mobile Benutzereinrichtung (20), um deren Mobilität in einem hierarchischen zellularen mobilen System (10) einzuschätzen, wobei das System eine kleinere Zellenschicht (14, 16) und eine größere Zellenschicht (12) umfasst und das Verfahren die folgenden Schritte umfasst:

- Empfangen eines Zellengewichtsparameters, der von einer Zelle in dem hierarchischen zellularen mobilen System (10) übertragen wird, wobei der Zellengewichtsparameter die effektive Größe der Zelle (12a, 14a, 16a) widerspiegelt, und
- Veranlassen der Benutzereinrichtung (20), basierend auf dem Zellengewichtsparameter und der Aufenthaltsdauer in der Zelle (12a, 14a, 16a) ein Mobilitätsmaß zu berechnen.

**2.** Verfahren nach Anspruch 1, weiterhin umfassend den Schritt des Definierens des Mobilitätsmaßes als das effektive Geschwindigkeitsmaß

$$v: \; v = \frac{\sum_{i=1}^{N} w_i}{\sum_{i=1}^{N} t_i} ,$$

wobei:

- N die Anzahl der Zellen-Neuauswahlen ist, die eine Benutzereinrichtung während einer Zeitperiode der Länge $T_{CRmax}$ vorgenommen hat,
- $w_i$ der Zellengewichtsparameter ist; und
- $t_i$ die Zeit ist, die die Benutzereinrichtung (20) in der Zelle (12a, 14a, 16a) verbracht hat, diejenige Zelle betreffend, die die Benutzereinrichtung beim Durchführen der Zellen-Neuauswahl verlassen hat.

**3.** Verfahren nach Anspruch 1 oder 2, weiterhin umfassend den Schritt des Definierens des Mobilitätsmaßes als die effektive, zeitlich begrenzte Geschwindigkeit $V_R$: $v_R = \frac{\frac{\left(T_{CR\max} - \sum_{i=0}^{N-1} t_i\right)}{t_N} w_N + \sum_{i=1}^{N-1} w_i}{T_{CR\max} - t_0}$, wobei:

- N die Anzahl der Zellen-Neuauswahlen ist, die die Benutzereinrichtung während einer Zeitperiode der Länge $T_{CRmax}$ vorgenommen hat,
- $w_i$ der Zellengewichtsparameter ist,

- $t_i$ die Zeit ist, die die Benutzereinrichtung in der Zelle verbracht hat, diejenige Zelle betreffend, die die Benutzereinrichtung beim Durchführen der Zellen-Neuauswahl I verlassen hat; und
- $t_0$ die Zeit ist, die die Benutzereinrichtung bislang in der aktuell dienenden Zelle verbracht hat.

**4.** Verfahren nach einem der vorhergehenden Ansprüche, weiterhin umfassend den Schritt des Definierens des Mobilitätsmaßes als eine modifizierte effektive Geschwindigkeit $v_0$:

$$v_0 = \frac{\sum_{i=0}^{N} w_i}{\sum_{i=0}^{N} t_i} \text{ WENN } \frac{w_0}{t_0} < \frac{\sum_{i=1}^{N} w_i}{\sum_{i=1}^{N} t_i} \text{ SONST } v_0 = \frac{\sum_{i=1}^{N} w_i}{\sum_{i=1}^{N} t_i},$$

wobei

- N die Anzahl der Zellen-Neuauswahlen ist, die die Benutzereinrichtung während einer Zeitperiode der Länge TCRmax vorgenommen hat,
- $w_i$ der Zellengewichtsparameter ist,
- $t_i$ die Zeit ist, die die Benutzereinrichtung in der Zelle verbracht hat, diejenige Zelle betreffend, die die Benutzereinrichtung beim Durchführen der Zellen-Neuauswahl I verlassen hat;
- $w_0$ der Zellengewichtsparameter ist, und
- $t_0$ die Zeit ist, die die Benutzereinrichtung bislang in der aktuell dienenden Zelle verbracht hat.

**5.** Verfahren nach einem der vorhergehenden Ansprüche, weiterhin umfassend den Schritt des Definierens eines Mobilitätsmaßes als eine gewichtete Anzahl von Zellen-Neuauswahlen$N_w$: $N_w = \sum_{i=1}^{N} w_i$, wobei

- N die Anzahl der Zellen-Neuauswahlen ist, die die Benutzereinrichtung während einer Zeitperiode der Länge $T_{CRmax}$ vorgenommen hat, und
- $w_i$ der Zellengewichtsparameter ist.

**6.** Mobile Benutzereinrichtung (20), umfassend Mittel zum Durchführen der Verfahrensschritte aus einem der vorhergehenden Ansprüche.

## Revendications

**1.** Procédé destiné à un équipement utilisateur mobile (20) pour estimer sa mobilité dans un système mobile cellulaire hiérarchique (10), le système comprenant une couche de cellule (14, 16) de taille plus petite et une couche de cellule de taille plus grande (12), le procédé comprenant les étapes consistant à :

- recevoir un paramètre de poids de cellule diffusé à partir d'une cellule du système mobile cellulaire hiérarchique (10), le paramètre de poids de cellule reflétant la taille effective de la cellule (12a, 14a, 16a), et
- laisser l'équipement utilisateur (20) calculer une mesure de mobilité basée sur le paramètre de poids de cellule et le temps qu'il a passé présent dans la cellule (12a, 14a, 16a).

**2.** Procédé selon la revendication 1, comprenant en outre l'étape consistant à définir la mesure de mobilité comme la mesure de la vitesse effective v : $v = \frac{\sum_{i=1}^{N} w_i}{\sum_{i=1}^{N} t_i}$, dans lequel :

- N représente le nombre de resélections de cellule qu'un équipement utilisateur a fait pendant un laps de temps

d'une durée $T_{CRmax}$ ;
- $w_i$ représente le paramètre de poids de cellule ; et
- $t_i$ représente la durée que l'équipement utilisateur (20) a passée dans la cellule (12a, 14a, 16a), pour la cellule d'où l'équipement utilisateur est sorti lors de la resélection de cellule i.

**3.** Procédé selon la revendication 1 ou 2, comprenant en outre l'étape consistant à définir la mesure de mobilité comme la mesure de la vitesse effective limitée dans le temps vR:
$$v_R = \frac{\frac{\left(T_{CR\max} - \sum_{i=0}^{N-1} t_i\right)}{t_N} w_N + \sum_{i=1}^{N-1} w_i}{T_{CR\max} - t_0},$$

dans lequel :

- N représente le nombre de resélections de cellule que l'équipement utilisateur a fait pendant une période de temps d'une durée $T_{CRmax}$ ;
- $w_i$ représente le paramètre de poids de cellule ;
- $t_i$ représente la durée que l'équipement utilisateur a passée dans la cellule, pour la cellule d'où l'équipement utilisateur est sorti lors de la resélection de cellule I ; et
- $t_0$ représente la durée que l'équipement utilisateur a passée jusqu'à présent dans la cellule de desserte actuelle.

**4.** Procédé selon l'une quelconque des revendications précédentes, comprenant en outre l'étape consistant à définir la mesure de mobilité comme la mesure de vitesse effective modifiée $v_0$ :

$$v_0 = \frac{\sum_{i=0}^{N} w_i}{\sum_{i=0}^{N} t_i} \quad \text{SI} \quad \frac{w_0}{t_0} < \frac{\sum_{i=1}^{N} w_i}{\sum_{i=1}^{N} t_i} \text{ AUTREMENT } v_0 = \frac{\sum_{i=1}^{N} w_i}{\sum_{i=1}^{N} t_i};$$

dans lequel

- N représente le nombre de resélections de cellule que l'équipement utilisateur a fait pendant une période de temps d'une durée $T_{CRmax}$ ;
- $w_i$ représente le paramètre de poids de cellule ;
- $t_i$ représente la durée que l'équipement utilisateur a passée dans la cellule, pour la cellule d'où l'équipement utilisateur est sorti lors de la resélection de cellule I ;
- $w_0$ représente le paramètre de poids de cellule ; et
- $t_0$ représente la durée que l'équipement utilisateur a passée jusqu'à présent dans la cellule de desserte actuelle.

**5.** Procédé selon l'une quelconque des revendications précédentes, comprenant en outre l'étape consistant à définir la mesure de mobilité comme le nombre moyen pondéré de resélections de cellule $N_w = \sum_{i=1}^{N} w_i$, dans lequel

- N représente le nombre de resélections de cellule que l'équipement utilisateur a fait pendant une période de temps d'une durée $T_{CRmax}$ ; et
- $w_i$ représente le paramètre de poids de cellule.

**6.** Équipement utilisateur mobile (20) comprenant un moyen destiné à mettre en oeuvre les étapes de procédé selon l'une quelconque des revendications précédentes.

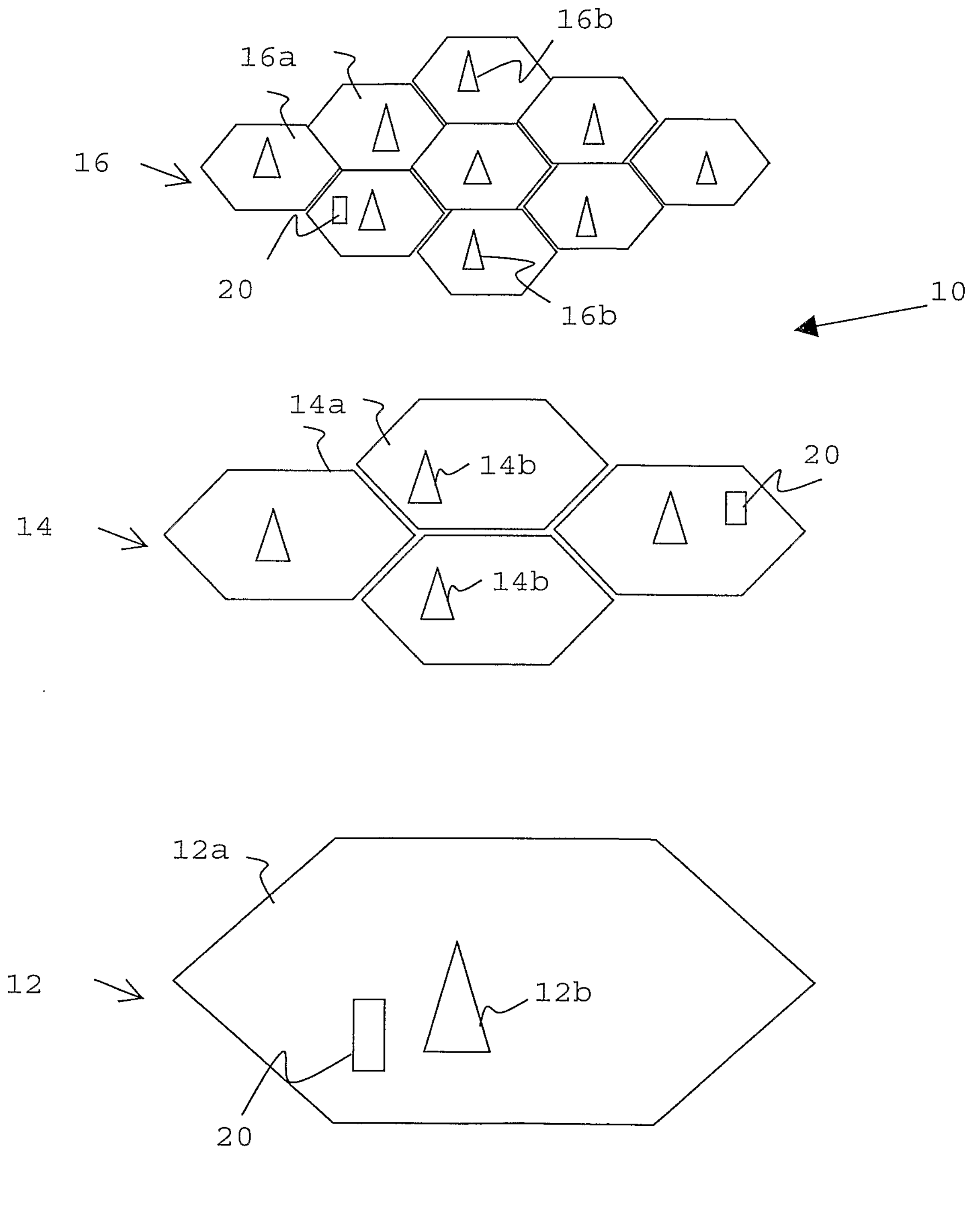


FIG. 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2000092540 A
- US 20020102976 A1
- US 5907808 A